# EUROPEAN PATENT APPLICATION

(11) **EP 4 474 369 A1**
(43) Date of publication of application: **11.12.2024**
(21) Application number: 23305921.1
(22) Date of filing: 09.06.2023
(51) Int. Cl.: C05D 9/02, C05G 3/90, C05G 5/35, C05B 7/00, C05C 1/00, C05C 3/00

(54) **UREASE INHIBITOR COMPOSITION AND THE UREA FERTILIZER COMPOSITION COMPRISING THE SAME**

(71) Applicant: SPECIALTY OPERATIONS FRANCE, 69003 Lyon (FR)
(72) Inventor: AHUJA, Ritu, Singapore (SG); THAKUR, Sandeep, Vadodara (IN); CHOUGULE, Neminath, Vadodara (IN)
(74) Representative: Delenne, Marc

(57) **Abstract**

The present invention relates to a urease inhibitor composition comprising a urease inhibitor, particularly NBPT and a basic compound. In addition, the present invention relates to a urea fertilizer composition comprising the same.

## Description

### Field of the Invention

The present invention relates to a urease inhibitor composition comprising a urease inhibitor, particularly NBPT and a basic compound. In addition, the present invention relates to a urea fertilizer composition comprising the same.

### Background of the Invention

Urea is the most common nitrogen-containing fertilizer. Urea has the highest nitrogen content of all nitrogen-containing fertilizers in common use (46 %). Its consumption worldwide has been considerably increased, from about 20 million tons in the early seventies to about 100 million tons at the beginning of the twenty first century. Nitrogen is a basic element for any living system as a constituent of protein.

Unfortunately, urea nitrogen cannot be assimilated directly by the plants and needs to be converted through hydrolysis into ammonium and nitrification into nitrate. Urea is first hydrolyzed in the soil under the action of an enzyme, commonly called urease, to produce ammonia and carbon dioxide. Ureases are found in numerous bacteria, fungi, algae, plants and some invertebrates, as well as in soils, as a soil enzyme. Urea hydrolysis tends to increase the pH of its environment as the ammonia is dissolved into the water in the soil, and part of the ammonia can also be released into the atmosphere, a process called ammonia volatilization, thus becoming unavailable for the plant. About 50 weight% of nitrogen can sometimes be lost as a result of the volatilization of ammonia, all depending on the soil type, water content, pH, climate conditions, etc.

The availability of nitrogen, originating from urea, to the root system of plants can be improved by combining a urea-containing fertilizer (i.e. by incorporation or addition) with a urease inhibitor. Urease inhibitors are compounds that are capable of temporarily reducing the activity of the enzyme and slow down the rate at which urea is hydrolyzed, avoiding peaks of ammonia concentration and therefore limiting the losses to the air. There are many compounds that can inhibit urease, but only a few that are non-toxic, effective at low concentrations, chemically stable enough and able to be combined with urea- containing fertilizers.

Among the most effective urease inhibitors known today are the phosphoric triamide compounds, first disclosed in US 4,530,714 (Allied Corporation, 1985). An example of an effective urease inhibitor, disclosed in said patent is N- (n-butyl) thiophosphoric triamide, which will be referred to herein as NBPT. This compound is actually the precursor for the active compound N-(n-butyl) phosphoric triamide (NBPT), obtained through oxidation of the thio-compound, but it is the thio-compound that is commonly produced, sold and used.

When combined with a urea-containing fertilizer, phosphoric triamide compounds reduce the rate at which urea is hydrolysed to ammonia in the soil. The benefits that are realized as a result of the delayed urea hydrolysis include the following: (1) nutrient nitrogen is available to the plant over a longer period of time, (2) excessive build-up of ammonia in the soil following the application of the urea-containing fertilizer is avoided, (3) the potential for nitrogen loss through ammonia volatilization is reduced, (4) the potential for damage by high levels of ammonia to seedlings and young plants is reduced, (5) plant uptake of nitrogen is increased, and (6) an increase in crop yields is attained. While phosphoric triamide compounds do not directly influence the rate of ammonium nitrification, they do control the levels of ammonium which are subject to the nitrification process and thereby indirectly controls the levels of nitrate nitrogen in the soil.

However, the urease inhibitor of the type phosphoric triamide, either applied as a liquid or as a solid, either applied on the urea granule or mixed in the urea granule is not stable over a prolonged period of time when in contact with urea blend fertilizer, despite the fact that a urease inhibitor of the type phosphoric triamide is generally disclosed for use with said urea blend fertilizers. Moreover, the urease inhibitor of the type phosphoric triamide is sensitive to acid, its decomposition process will speed up when mixed with some acidic fertilizers like ammonium sulfate.

Several methods have been developed to deal with this problem. For example, US 2010/0206031 A1 (Whitehurst) describes a composition consisting of NBPT in a basic organic amine alcohol solvent, coated onto a blend of urea-particles and mono ammonium phosphate particles. WO2017100507A1 (Koch) disclosed a method of treating urea particulate and NBPT with basic component, calcium oxide, zinc oxide, magnesium oxide, calcium carbonate and the like, wherein the basic component is incorporated into the mixture either by powder mixing or coating by means of wax.

It is still favorable to develop a process to improve the stability of NBPT in urea fertilizers, especially when mixing with acidic fertilizers.

### Summary of the Invention

It is found in the present application that the basic compound can improve the stability of urease inhibitors, particularly when combined with acidic fertilizers, wherein the basic compound is the one or more selected from zinc oxide, zinc salt, magnesium salt, and calcium salt.

In one aspect of the present invention, it is provided a urease inhibitor composition comprising:
a) a urease inhibitor of the type phosphoric triamide represented by formula I : 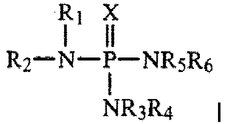 wherein
   X is oxygen or sulfur;
   R₁ is alkyl, cycloalkenyl, aralkyl, aryl, alkenyl, alkynyl, or cycloalkyl;
   R₂ is hydrogen, alkyl, cycloalkenyl, aralkyl, aryl, alkenyl, alkynyl, or cycloalkyl;
   R₃, R₄, R₅ and R₆ are independently hydrogen or alkyl having 1 to 6 carbon atoms;
b) a basic compound being the one or more selected from the zinc oxide, zinc salt, magnesium salt, and calcium salt, wherein the salt is selected from sulfide, carbonate, borate, bromide, chloride, acetate, citrate, silicate, sulfate, phosphate, titanate, stearate, ricinoleate, hexafluorosilicate, hydroxide, lactate, gluconate, ascorbate, hydrogen aspartate, nitrate, hexanoate; and
c) optional solvent(s) selected from water, organic solvents and the combination thereof.

In one embodiment of the present invention, the urease inhibitor composition can be formulated into various formulations, including but not limited to powder, suspension, oil dispersions, emulsion, suspo-emulsion, capsule suspension or soluble liquid.

In another aspect of the present invention, it is provided a urea fertilizer composition comprising:
i) urea granule; and
ii) urease inhibitor composition as described above, presented in an amount of 0.1 to 500 mg, preferably 10 to 300 mg, more preferably 30 to 200 mg, based on 1000 g of the urea fertilizer composition.

In one embodiment of the present invention, the urea fertilizer composition further comprises an acidic fertilizer selected from the group consisting of monoammonium phosphate (MAP), diammonium phosphate (DAP), ammonium nitrate, ammonium sulfate, and ammonium hydrogensulfate, rock phosphate, super phosphate, serpentine super phosphate, reactive phosphate rock, and the combination thereof.

In still another aspect of the present invention, it is provided a process of preparing the urea fertilizer composition as illustrated above, comprising a step of coating at least part of the surface of the urea granule with the urease inhibitor composition.

### Detailed description of the Invention

Throughout the description, including the claims, the term "comprising one" or "comprising a" should be understood as being synonymous with the term "comprising at least one", unless otherwise specified. The terms "between" and "from ... to..." should be understood as being inclusive of the limits.

The articles "a", "an" and "the" are used to refer to one or to more than one (i.e., to at least one) of the grammatical object of the article.

It should be noted that in specifying any range of concentration, weight ratio or amount, any particular upper concentration, weight ratio or amount can be associated with any particular lower concentration, weight ratio or amount, respectively.

As used herein, the term "alkyl" means a saturated hydrocarbon radical, which may be straight, branched or cyclic, such as, methyl, ethyl, n-propyl, iso-propyl, n-butyl, sec-butyl, t-butyl, pentyl, n-hexyl, cyclohexyl.

### Urease inhibitor composition

In one aspect of the present invention, it is provided an urease inhibitor composition comprising:
a) an urease inhibitor of the type phosphoric triamide represented by formula I : 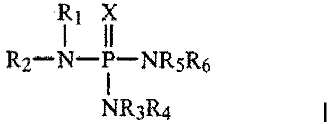 wherein
   X is oxygen or sulfur;
   R₁ is alkyl, cycloalkenyl, aralkyl, aryl, alkenyl, alkynyl, or cycloalkyl;
   R₂ is hydrogen, alkyl, cycloalkenyl, aralkyl, aryl, alkenyl, alkynyl, or cycloalkyl;
   R₃, R₄, R₅ and R₆ are independently hydrogen or alkyl having 1 to 6 carbon atoms;
b) a basic compound being the one or more selected from zinc oxide, zinc salt, magnesium salt, and calcium salt, wherein the salt is selected from sulfide, carbonate, borate, bromide, chloride, acetate, citrate, silicate, sulfate, phosphate, titanate, stearate, ricinoleate, hexafluorosilicate, hydroxide, lactate, gluconate, ascorbate, hydrogen aspartate, nitrate, hexanoate and the combination thereof; and
c) optional solvent(s) selected from water and organic solvents.

In the present invention, when referring to urease inhibitors of the type phosphoric triamide, it is understood that this comprises all active compounds, active precursors and active conversion products, resulting from said phosphoric triamides.

In one embodiment of the present invention, the urease inhibitor has the general formula I as described above, preferably the urease inhibitor is N-(n-butyl) thiophosphoric triamide (NBPT).

In the present invention, it is found that the basic compound can improve the stability of urease inhibitor, particularly when combined with acidic fertilizers.

In one embodiment, the basic compound is selected from zinc oxide or zinc salt. In one preferred embodiment, the basic compound is selected from zinc salt of sulfide, carbonate, borate, bromide, chloride, acetate, citrate, silicate, sulfate, phosphate, titanate, stearate, ricinoleate, hexafluorosilicate, hydroxide, lactate, gluconate, ascorbate, hydrogen aspartate, nitrate, hexanoate and the combination thereof. In one more preferably embodiment, the basic compound is selected from zinc sulfide, zinc carbonate or the combination thereof..

In one embodiment of the present invention, the urease inhibitor presents in an amount ranging from 0.1 to 50 wt.%, preferably 1 to 30 wt.%, more preferably 3 to 20 wt.%, based on 100 wt.% by weight of the urease inhibitor composition.

In one embodiment of the present invention, the basic compound presents in the composition in an amount ranging from 0.1 to 70 wt.%, preferably 20 to 60 wt.%, most preferably 30 to 55 wt.%, based on the total weight of the urease inhibitor composition.

In one embodiment of the present invention, the urease inhibitor composition of the present invention comprise solvents. The solvent can be those typically used solvents for NBPT, preferably aprotic solvents.

In one embodiment of the present invention, the solvent is the one or more selected from alkylene glycol alkyl ether, DMSO, glycol, benzyl alcohol, N,N-dimethylacetamide, 2,2-dimethyl-1,3-dioxolan-4-ylmethanol, butyl lactate, hydroxyethyl morpholine, 2-amino-butanol, 2-amino-2-methylpropanol, 2-butoxyethanol propane-1,2-diol, 2,2-oxydiethanol, NMP, and glycerin. It is surprisingly found these solvents can improve the physical stability of the composition.

The alkylene glycol alkyl ether which can be used in the present invention is selected from the group consisting of diethylene glycol monoethyl ether, diethylene glycol monopropyl ether, diethylene glycol monopentyl ether, diethylene glycol monoisopropyl ether, diethylene glycol monoisobutyl ether, diethylene glycol monohexyl ether, triethylene glycol monomethyl ether, triethylene glycol monopropyl ether, triethylene glycol monobutyl ether, triethylene glycol monopentyl ether, triethylene glycol monoisopropyl ether, triethylene glycol monoisobutyl ether, triethylene glycol monohexyl ether, tetraethylene glycol monomethyl ether, tetraethylene glycol monoethyl ether, tetraethylene glycol monopropyl ether, tetraethylene glycol monobutyl ether, tetraethylene glycol monopentyl ether, tetraethylene glycol monoisopropyl ether, tetraethylene glycol monoisobutyl ether, tetraethylene glycol monohexyl ether, dipropylene glycol monoethyl ether, dipropylene glycol monopropyl ether, dipropylene glycol monobutyl ether, dipropylene glycol monopentyl ether, dipropylene glycol monoisopropyl ether, dipropylene glycol monoisobutyl ether, dipropylene glycol monohexyl ether, tripropylene glycol monoethyl ether, tripropylene glycol monopropyl ether, tripropylene glycol monobutyl ether, tripropylene glycol monopentyl ether, tripropylene glycol monoisopropyl ether, tripropylene glycol monoisobutyl ether, tripropylene glycol monohexyl ether, and combinations thereof. In one embodiment of the present invention, the alkylene glycol alkyl ether is selected from diethylene glycol monomethyl ether, triethylene glycol monomethyl ether or the combination thereof.

In one embodiment of the present invention, the urease inhibitor composition further comprises micronutrient fertilizers containing zinc, iron, molybdenum, copper, boron, chlorine, magnesium, calcium and mixtures thereof.

More generally, micronutrient fertilizers may be used either as sole plant nutrient, or as an additional plant nutrient to be used in combination with a separate plant nutrient which can be for example, but not limited to, nitrogen fertilizer, phosphate fertilizer.

In one embodiment of the present invention, the urease inhibitor is N-(n-butyl) thiophosphoric triamide (NBPT).

In one embodiment of the present invention, the urease inhibitor composition is formulated as powder, suspension, emulsion, oil dispersions, suspoemulsion, capsule suspension or soluble liquid.

In one embodiment of the present invention, the urease inhibitor composition further comprises one or more additives/adjuvants selected from the group consisting of dispersing agent, wetting agent, antifoaming agent, antifreezing agent, pigment, Supplement, rheology modifier and Biocide.

In the present invention, the urea inhibitor composition can be prepared according to the common knowledge in the art. In case the urea inhibitor composition is formulated as a suspension, it can be prepared by mixing necessary additives/surfactant and solvents until a homogenous formulation is obtained.

### Urea fertilizer composition

In another aspect of the present invention, it is provided a urea fertilizer composition comprising:
i) urea granule; and
ii) urease inhibitor composition as illustrated above which presents in an amount of 0.1 to 500 mg, preferably 10 to 300 mg, more preferably 30 to 200 mg, based on 1000 g of the urea fertilizer composition.

In one embodiment of the present invention, the urea fertilizer composition comprises urea granules as nitrogen source in an amount of ranging from 10 wt.% to 99 wt.%, based on the total weight of the urea fertilizer composition.

In the present invention, the urea granule is intended to cover all the solid form of urea, including but not limited to pellets, prills, pastilles, flakes, granules, or a combination thereof.

In one embodiment of the present invention, the urea fertilizer is formulated in the form of granules.

In one embodiment of the present invention, the urea fertilizer composition further comprises an acidic fertilizer selected from the group consisting of monoammonium phosphate (MAP), diammonium phosphate (DAP), ammonium nitrate, ammonium sulfate, and ammonium hydrogensulfate, rock phosphate, super phosphate, serpentine super phosphate, reactive phosphate rock, and the combination thereof.

In one embodiment of the present invention, the acidic fertilizer is selected from monoammonium nitrate, sulfate, or phosphate, diammonium nitrate, sulfate, or phosphate, and ammonium nitrate, sulfate, or phosphate. The weight ratio of urea granules to acidic fertilizer can vary in different embodiment, for example the weight ratio is 1:99 to 99:1, preferably 20:80 to 80:20, more preferably 40:60 to 60:40.

In still another aspect of the present invention, it is provided a process of preparing the urea fertilizer composition as illustrated above. The process comprise a step of coating at least part of the surface of the urea granule with the urease inhibitor composition.

In one embodiment of the present invention, the process further comprises a step of mixing the coated urea granules with the acidic fertilizers.

### Examples

### 1. Materials

The materials used in the examples of the present invention are listed below:

| Ingredients | Function | Supplier |
|---|---|---|
| Rhodoline 271 | Dispersant | Solvay |
| SAG 1572 | Antifoam | Momentive |
| Prism Red L 092 | Pigment | Lamberti |
| AMP-95 (95% 2-amino-2-methyl-1-propanol in an aqueous solution) | pH control agent | Dow |
| Sodium selenate | Supplement | Merck |
| Proxel GXL | Biocide | Lonza |
| Agrhopol 23W (2% aq. Solution) | Rheology modifier | Solvay |

### 2. The urease inhibitor composition

The urease inhibitor compositions were prepared as below:
Step 1:- Agrhopol 23W (2% aq. Solution) Preparation
   - Add 92.95 part of DI water, add 0.05 part of Proxel GXL Mix well.
   - Disperse 2 part of Agrhopol 23W in 5 parts of Propylene glycol.
   - Add gel suspension to the water part with vigorous stirring.
   - Mix well until homogenous gel is formed.
Step 2:- Preparation of Premix
   - Charge the DI Water to the vessel.basic compound, AMP-95, Sodium selenate and Prism Red L 092 to the vessel.
   - Mix under high shear until the suspension is homogenous.
   - Add NBPT and mix under low shear until the suspension is homogenous.
Step 3:- Milling of Premix
   - Mill the suspension in a bead mill until the particle size is d90 ≤ 10 µm.
   - Chilled water circulation (10 -15°C) is to be maintained in the vessel and mill throughout the process.
Step 4:- Gelling
   - To the milled suspension, add Agrhopol 23W solution. Mix until the suspension is homogenous.

The urease inhibitor composition as prepared are listed below, wherein "S" refers to the examples of the present invention, "CS" refers to the comparative examples.

**Table 1: urease inhibitor composition**

| | **CS1** | **S1** | **S2** | **S3** | **S4** | **S5** |
|---|---|---|---|---|---|---|
| NBPT | 5.15 | 5.15 | 5.15 | 5.15 | 12.5 | 10.30 |
| Zinc Sulfide | | | 39 | 39 | 39 | |
| Zinc Oxide | | 39 | | | | |
| Zinc carbonate | | | | | | 39 |
| Rhodoline 271 | | 2.73 | 2.73 | 2.73 | 2.73 | 2.66 |
| Geronol odesa 05 | 93.85 | | | | | |
| Propylene Glycol | | 4.68 | 4.68 | 4.68 | 4.68 | 4.68 |
| AMP-95 | | | | 1.5 | | |
| Sodium Selenate | | | | | 2 | |
| SAG 1572 | | 0.25 | 0.25 | 0.25 | 0.25 | 0.25 |
| Prism Red L 092 | 1 | 1 | 1 | 1 | 1 | 1 |
| Proxel GXL | | 0.05 | 0.05 | 0.05 | 0.05 | 0.05 |
| Agrhopol 23W (2% aq. Solution) | | 5 | 5 | 5 | 5 | 5 |
| DI Water | | 40.64 | 40.64 | 40.64 | 32.79 | 37.06 |

### 3. Urea fertilizer composition

The urea fertilizer compositions were prepared as below:
- Coat blank urea with NBPT formulation, Target 300ppm of NBPT on coated urea
- Mix coated urea with AMS with ratio of 40:60 (Urea: AMS)
- Put the mixed granules in double plastic bags with excess air removed.

The obtained urea fertilizer composition was then stored under 25°C/60% RH over a period of hours. At regular intervals, colored urea granules were separated manually and tested for residual NBPT content by HPLC analyses. (HPLC: Agilent 1260 Infinity II; Column: XTERRA MS C18, 5.0 µm, 4.6mm×250mm; Temp: 30°C; Detector wavelength: 205 nm; acetonitrile: water 2:8; Inject Volume: 5 µL; Flow: 1.0mL/min; Run time: 15min).

The NBPT stability assessment results were listed in table 2.

**Table 2: the urea fertilizer compositions**

| Urease inhibitor | NBPT remaining% after 24h | NBPT remaining% after 48h | NBPT remaining% after 72h |
|---|---|---|---|
| CS1 | 45.92% | 0.00% | 0.00% |
| S1 | 76.35% | 45.27% | 14.86% |
| S2 | 80.70% | 67.83% | 49.60% |
| S3 | 78.87% | 69.01% | 53.52% |
| S4 | 81.43% | 69.28% | 52.91% |
| S5 | 78.02% | 54.96% | 30.23% |

As it is shown in the table 2, zinc oxide and zinc sulfide and zinc carbonate can improve the NBPT stability compared to control, moreover zinc sulfide is significant better than zinc oxide, zinc carbonate and the control.

## Claims

1. A urease inhibitor composition comprising:
a) a urease inhibitor of the type phosphoric triamide represented by formula I : 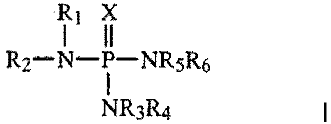 wherein
X is oxygen or sulfur;
R₁ is alkyl, cycloalkenyl, aralkyl, aryl, alkenyl, alkynyl, or cycloalkyl;
R₂ is hydrogen, alkyl, cycloalkenyl, aralkyl, aryl, alkenyl, alkynyl, or cycloalkyl;
R₃, R₄, R₅ and R₆ are independently hydrogen or alkyl having 1 to 6 carbon atoms;
b) a basic compound being the one or more selected from zinc oxide, zinc salt, magnesium salt, and calcium salt, wherein the salt is selected from sulfide, carbonate, borate, bromide, chloride, acetate, citrate, silicate, sulfate, phosphate, titanate, stearate, ricinoleate, hexafluorosilicate, hydroxide, lactate, gluconate, ascorbate, hydrogen aspartate, nitrate, hexanoate and the combination thereof; and
c) optional solvent(s) selected from water, organic solvents and the combination thereof.

2. The urease inhibitor composition according to claim 1, wherein the urease inhibitor presents in an amount ranging from 0.1 to 50 wt.%, preferably 1 to 30 wt.%, more preferably 3 to 20 wt.%, based on 100 wt.% by weight of the urease inhibitor composition.

3. The urease inhibitor composition according to claim 1, wherein zinc salt presents in an amount ranging from 0.1 to 70 wt.%, preferably 20 to 60 wt.%, most preferably 30 to 55 wt.%, based on the total weight of the urease inhibitor composition.

4. The urease inhibitor composition according to claim 1, wherein the organic solvent is the one or more selected from alkylene glycol alkyl ether, DMSO, glycol, benzyl alcohol, N,N-dimethylacetamide, 2,2-dimethyl-1,3-dioxolan-4-ylmethanol, butyl lactate, hydroxyethyl morpholine, 2-amino-butanol, 2-amino-2-methyl-propanol, 2-butoxyethanol propane-1,2-diol, 2,2-oxydiethanol, NMP, and glycerin.

5. The urease inhibitor composition according to claim 1, wherein the alkylene glycol alkyl ether is selected from the group consisting of diethylene glycol monoethyl ether, diethylene glycol monopropyl ether, diethylene glycol monopentyl ether, diethylene glycol monoisopropyl ether, diethylene glycol monoisobutyl ether, diethylene glycol monohexyl ether, triethylene glycol monomethyl ether, triethylene glycol monopropyl ether, triethylene glycol monobutyl ether, triethylene glycol monopentyl ether, triethylene glycol monoisopropyl ether, triethylene glycol monoisobutyl ether, triethylene glycol monohexyl ether, tetraethylene glycol monomethyl ether, tetraethylene glycol monoethyl ether, tetraethylene glycol monopropyl ether, tetraethylene glycol monobutyl ether, tetraethylene glycol monopentyl ether, tetraethylene glycol monoisopropyl ether, tetraethylene glycol monoisobutyl ether, tetraethylene glycol monohexyl ether, dipropylene glycol monoethyl ether, dipropylene glycol monopropyl ether, dipropylene glycol monobutyl ether, dipropylene glycol monopentyl ether, dipropylene glycol monoisopropyl ether, dipropylene glycol monoisobutyl ether, dipropylene glycol monohexyl ether, tripropylene glycol monoethyl ether, tripropylene glycol monopropyl ether, tripropylene glycol monobutyl ether, tripropylene glycol monopentyl ether, tripropylene glycol monoisopropyl ether, tripropylene glycol monoisobutyl ether, tripropylene glycol monohexyl ether, and combinations thereof.

6. The urease inhibitor composition according to claim 1, wherein the urease inhibitor composition is formulated as powder, suspension, oil dispersions, emulsion, suspoemulsion, capsule suspension or soluble liquid.

7. The urease inhibitor composition according to claim 1, wherein the urease inhibitor composition further comprises micronutrient.

8. The urease inhibitor composition according to claim 1, wherein the urease inhibitor is N-(n-butyl) thiophosphoric triamide (NBPT).

9. A urea fertilizer composition comprising:
i) urea granule; and
ii) urease inhibitor composition according any one of claims 1 or 7, presented in an amount of 0.1 to 500 mg, preferably 10 to 300 mg, more preferably 30 to 200 mg, based on 1000 g of the urea fertilizer composition.

10. The urea fertilizer composition according to claim 9, wherein the urea fertilizer composition further comprises an acidic fertilizer selected from the group consisting of monoammonium phosphate (MAP), diammonium phosphate (DAP), ammonium nitrate, ammonium sulfate, and ammonium hydrogensulfate, rock phosphate, super phosphate, serpentine super phosphate, reactive phosphate rock, and the combination thereof.

11. A process of preparing the urea fertilizer composition according to claim 9 or 10, comprising a step of coating at least part of the surface of the urea granule with the urease inhibitor composition.

12. The process according to claim 11, wherein the process further comprises a step of mixing the coated urea granule with the acidic fertilizers.
